# DEMANDE DE BREVET EUROPEEN

(11) **EP 1 088 847 A1**
(43) Date de publication de la demande: **04.04.2001**
(21) Numéro de dépôt: 99870184.1
(22) Date de dépôt: 10.09.1999
(51) Int. Cl.: C08J 9/14

(54) **Procédé pour la fabrication de mousses polymériques à l'aide d'agents d'expansion fluorés**

(71) Demandeur: SOLVAY (Société Anonyme), 1050 Bruxelles (BE)
(72) Inventeur: Dournel, Pierre, 1040 Bruxelles (BE)
(74) Mandataire: Jacques, Philippe

(57) **Abrégé**

L'invention concerne un procédé pour la fabrication d'une mousse à base de polymère dans lequel on met en oeuvre un agent gonflant comprenant du 1,1-difluoroéthane, du 1,1,1,2-tétrafluoroéthane et éventuellement un adjuvant.

## Description

La présente invention concerne un procédé pour la fabrication de mousses à base de polymère, mettant en oeuvre un agent gonflant et éventuellement un adjuvant.

Dans un procédé de fabrication de mousses à base de polymère, le choix d'un agent gonflant est un problème présentant un intérêt technique important car les propriétés physiques de la mousse ou, lorsque la mousse est mise en oeuvre, de l'objet fabriqué, notamment sa compressibilité, sa stabilité dimensionnelle, son hygroscopicité, sa conductibilité thermique, sa densité, sa structure cellulaire et ses propriétés de surface, dépendent de manière critique de la nature de l'agent gonflant. De plus l'agent gonflant doit être compatible avec le polymère dans les conditions de mise en oeuvre. Il est, par exemple, souhaitable que l'agent gonflant soit soluble, le cas échéant, dans le polymère fondu.

On a utilisé des chlorocarbures tels que le chlorure de méthyle à titre d'agent gonflant. Ce dernier composé présente cependant une toxicité importante.

On a également utilisé des chlorofluorocarbures tels que le dichlorodifluorométhane (CFC-12) puis des hydrochlorofluorocarbures tels que par exemple les mélanges de HCFC-22 (chlorodifluorométhane) avec le HCFC-142b (1-chloro-1,1-difluoroéthane) à titre d'agent gonflant. Ces composés doivent être remplacés progressivement en raison de leur mise en cause dans le contexte de la dégradation de la couche d'ozone stratosphérique. Le réchauffement atmosphérique est un autre problème écologique qui doit également être pris en compte.

Il a été proposé d'utiliser du dioxyde de carbone à titre d'agent gonflant unique. Les mousses ainsi produites présentent cependant une pauvre capacité d'isolation thermique, liée à une augmentation rapide de la conductibilité thermique avec le temps. De plus, ce composé cause des problèmes lors de la mise en oeuvre, dus à sa pression de gaz élevée.

Pour le cas spécifique d'un procédé de fabrication de panneaux de mousse à base de polystyrène extrudé, la demande de brevet EP-A-543242 a proposé des agents gonflants contenant du 1,1-difluoroéthane et de l'éthanol et/ou du dioxyde de carbone et/ou du butane. Ces agents gonflants présentent cependant des problèmes, notamment en ce qui concerne la conductibilité thermique des panneaux obtenus.

L'invention vise à mettre à disposition un procédé permettant d'obtenir une mousse à base de polymères présentant des propriétés adéquates, notamment en ce qui concerne, le cas échéant, la conductibilité thermique des objets obtenus, tout en respectant les exigences écologiques et toxicologiques.

En conséquence, l'invention concerne un procédé pour la fabrication d'une mousse à base de polymère dans lequel on met en oeuvre un agent gonflant comprenant du 1,1-difluoroéthane (HFC-152a), du 1,1,1,2-tétrafluoroéthane (HFC-134a) et éventuellement un adjuvant.

Il a été trouvé, de manière surprenante, que le procédé selon l'invention permet une mise en oeuvre aisée de polymères pour obtenir des mousses à base de polymère présentant de bonnes propriétés physiques tout en respectant l'environnement.

Dans le procédé selon l'invention, l'agent gonflant comprend souvent plus de 60 % en poids de 1,1-difluoroéthane et de 1,1,1,2-tétrafluoroéthane. De préférence, l'agent gonflant comprend plus de 80 % en poids de 1,1-difluoroéthane et de 1,1,1,2-tétrafluoroéthane. Un agent gonflant comprenant plus de 90 % en poids de 1,1-difluoroéthane et de 1,1,1,2-tétrafluoroéthane est tout particulièrement préféré.

Dans l'agent gonflant, le rapport pondéral entre le 1,1-difluoroéthane et le 1,1,1,2-tétrafluoroéthane est généralement supérieur à 1. Souvent le rapport est d'au moins 1,5. De préférence le rapport est de plus de 2. Un rapport d'au moins 2,3 est tout particulièrement préféré. Généralement, le rapport est d'au plus 9. Plus souvent, le rapport est d'au plus 5. Un rapport d'au plus 4 est préféré. Un rapport d'au plus 3,5 est tout particulièrement préféré.

Dans le procédé selon l'invention, l'agent gonflant contient éventuellement un adjuvant. L'adjuvant est, de préférence, sélectionné parmi les alcools et le dioxyde de carbone. Les alcools sont plus particulièrement préférés. Parmi les alcools sont utilisables, par exemple, les alcools aliphatiques présentant un point d'ébullition atmosphérique de 50 °C à 120 °C. Le méthanol, l'éthanol, le n-propanol et l'isopropanol sont préférés. L'éthanol est tout particulièrement préféré. Le dioxyde de carbone est mis en oeuvre, de préférence, à l'état liquide.

La teneur en adjuvant dans l'agent gonflant est généralement d'au plus 20 % en poids. Une teneur en adjuvant de moins de 10 % en poids convient bien. De préférence, la teneur en adjuvant est d'au plus 8 % en poids. Lorsque l'agent gonflant contient un adjuvant, la teneur en adjuvant est généralement d'au moins 0.1 % en poids. Plus souvent la teneur est d'au moins 0.5 % en poids, de préférence d'au moins 1 % en poids.

Dans le procédé selon l'invention, l'agent gonflant peut être constitué essentiellement de 1,1-difluoroéthane, de 1,1,1,2-tétrafluoroéthane et éventuellement d'un adjuvant. L'agent gonflant peut également être constitué de 1,1-difluoroéthane, de 1,1,1,2-tétrafluoroéthane et éventuellement d'un adjuvant.

L'invention concerne aussi des compositions comprenant du 1,1-difluoroéthane, du 1,1,1,2-tétrafluoroéthane et éventuellement un adjuvant, utilisables comme agent gonflant dans un procédé pour la fabrication d'une mousse à base de polymère. Les adjuvants utilisables et préférés et les proportions et teneurs utilisables et préférées dans les compositions selon l'invention sont décrits plus haut dans le cadre de l'utilisation des compositions selon l'invention à titre d'agent gonflant dans le procédé selon l'invention.

Les techniques de fabrication de mousse à base de polymère mettant en oeuvre un agent gonflant sont connues. On préfère utiliser un procédé d'extrusion moussage dans lequel on met en oeuvre dans une extrudeuse un polymère fondu auquel on ajoute une quantité d'agent gonflant et on extrude le mélange de polymère et d'agent gonflant pour obtenir une mousse à base du polymère.

La quantité d'agent gonflant est, généralement d'au plus 15 % en poids du polymère, de préférence d'au plus 10 % en poids. La quantité est généralement d'au moins 5 % en poids, de préférence d'au moins 7 % en poids.

Le procédé selon l'invention peut être utilisé pour la fabrication de mousses à base de tout polymère connu pour donner des mousses tels que, par exemple, les polymères cités dans ULLMANN, Encyclopedia of Technical Chemistry, 5 ed., Vol. A 11, p. 435). Le procédé selon l'invention s'applique, de manière avantageuse, à la fabrication de mousses à base de polyoléfines ou de mousses polyalcénylaromatiques. De manière préférée le procédé selon l'invention s'applique à la fabrication de mousses à base de polystyrène, de préférence à cellules fermées. De manière particulièrement préférée le procédé selon l'invention s'applique à la fabrication de mousses à base de polystyrène par extrusion (XPS). en particulier pour faire des panneaux d'isolation thermique.

L'invention concerne donc aussi un panneau d'isolation thermique comprenant une mousse à base de polymère obtenu selon le procédé selon l'invention.

Les exemples ci-après entendent illustrer l'invention sans toutefois la limiter.

### Exemples 1-3

On a introduit du polystyrène dans une extrudeuse de type «tandem» et on a introduit, à une pression d'opération de 220-bar , 8,5 % en poids du polystyrène de l'agent gonflant. On a extrudé ce mélange pour obtenir un panneau d'isolation thermique. Ce dernier a été stocké à température ambiante pendant 90 jours et sa conductibilité thermique à 10 °C a été mesurée sur un appareil de mesure de conductibilité thermique de type FOX200 vendu par la société LASERCOMP. Le tableau ci-après montre les résultats obtenus mettant en oeuvre différents agents gonflants conformément à l'invention. Les teneurs en HFC-152a, HFC-134a et éthanol dans l'agent gonflant sont exprimées en parts en poids.

**Tableau 1**

| Exemple | HFC-152a/ | HFC-134a | Ethanol | Densité apparente kg /m³ | Conductibilité thermique λ 10 °C 90 d mW/m.K |
|---|---|---|---|---|---|
| 1 | 70 | 30 | 5 | 40 | 26,6 |
| 2 | 75 | 25 | 5 | 37 | 25,9 |
| 3 | 75 | 25 | 0 | 37 | 27,0 |

Toutes les mousses contenaient plus de 90 % de cellules fermées.

### Exemple 4

On a fabriqué par extrusion, conformément à la procédure des exemples 1 à 3, mettant en oeuvre un agent gonflant constitué de 75 parts en poids de HFC-152a, 25 parts en poids de HFC-134a et 5 parts en poids d'éthanol, un panneau d'isolation thermique à base de polystyrène d'une épaisseur de 4 cm et d'une densité apparente de 36,9 kg/m³, présentant une teneur en cellules fermées de 99 %. Le panneau d'isolation a été stocké a température ambiante et sa conductibilité thermique à 10 °C a été mesurée. Après 60 jours la conductibilité thermique était de 25.2 mW/m.K. Après 180 jours la conductibilité thermique était de 27.1 mW/m.K. Après 290 jours la conductibilité thermique était de 27.9 mW/m.K.

Le procédé selon l'invention permet d'obtenir une mousse et un panneau d'isolation thermique avec une densité convenable et des bonnes propriétés quant à la conductibilité thermique. La conductibilité thermique de la mousse ou du panneau demeure à des valeurs tout à fait convenables même après une longue durée de stockage à température ambiante.

## Revendications

1. Procédé pour la fabrication d'une mousse à base de polymère dans lequel on met en oeuvre un agent gonflant comprenant du 1,1-difluoroéthane, du 1,1,1,2-tétrafluoroéthane et éventuellement un adjuvant.

2. Procédé selon la revendication 1, dans lequel le rapport pondéral entre le 1,1-difluoroéthane et le 1,1,1,2-tétrafluoroéthane dans l'agent gonflant est d'au moins 1,5.

3. Procédé selon la revendication 1, dans lequel le rapport pondéral entre le 1,1-difluoroéthane et le 1,1,1,2-tétrafluoroéthane dans l'agent gonflant est de plus de 2.

4. Procédé, selon l'une quelconque des revendications 1 à 3 dans lequel l'agent gonflant contient plus de 60 % en poids d'un mélange de 1,1-difluoroéthane et de 1,1,1,2-tétrafluoroéthane.

5. Procédé selon l'une quelconque des revendications 1 à 4 dans lequel l'agent gonflant contient un alcool à titre d'adjuvant.

6. Procédé selon l'une quelconque des revendications 1 à 5 dans lequel la mousse à base de polymère est une mousse à base de polyoléfines ou une mousse polyalcénylaromatique.

7. Procédé selon la revendication 6 dans lequel la mousse à base de polymère est une mousse de polystyrène à cellules fermées.

8. Composition comprenant du 1,1-difluoroéthane, du 1,1,1,2-tétrafluoroéthane et éventuellement un adjuvant, utilisable comme agent gonflant pour la fabrication de mousses à base de polymère.

9. Composition selon la revendication 8 comprenant un alcool et/ou le dioxyde de carbone à titre d'adjuvant.

10. Composition selon la revendication 9 dans laquelle l'alcool est choisi parmi le méthanol, l'éthanol, le n-propanol et l'isopropanol.

11. Composition selon l'une quelconque des revendications 8 à 10, dans laquelle le rapport pondéral entre le 1,1-difluoroéthane et le 1,1,1,2-tétrafluoroéthane est d'au moins 1,5.

12. Composition selon l'une quelconque des revendications 8 à 11, contenant plus de 60 % en poids de 1,1-difluoroéthane et de 1,1,1,2-tétrafluoroéthane.

13. Panneau d'isolation thermique, comprenant une mousse à base de polymère obtenu selon le procédé selon l'une quelconque des revendications 1 à 7.
